# EUROPÄISCHE PATENTSCHRIFT

(11) **EP 3 328 700 B1**
(45) Veröffentlichungstag und Bekanntmachung des Hinweises auf die Patenterteilung: **05.01.2022**
(21) Anmeldenummer: 16745453.7
(22) Anmeldetag: 28.07.2016
(51) Int. Cl.: B60T 17/00, B01D 53/26, F15B 21/04

(54) **LUFTTROCKNERPATRONE**
AIR DRYER CARTRIDGE
CARTOUCHE DE SÉCHEUR D'AIR

(30) Priorität: 30.07.2015 DE 102015112488
(43) Veröffentlichungstag der Anmeldung: 06.06.2018
(73) Patentinhaber: KNORR-BREMSE Systeme für Nutzfahrzeuge GmbH, 80809 München (DE)
(72) Erfinder: SCHNITTGER, Karsten, 80935 München (DE)
(86) Internationale Anmeldenummer: PCT/EP2016/067974
(87) Internationale Veröffentlichungsnummer: WO 2017/017168

(56) Entgegenhaltungen:
- DE-A1- 19 827 566
- DE-A1- 19 955 898
- DE-U1- 20 116 232
- US-A- 5 110 327

## Beschreibung

Die vorliegende Erfindung betrifft eine Lufttrocknerpatrone, insbesondere eine Lufttrocknerpatrone für eine Druckluftaufbereitungsanlage eines Nutzfahrzeugs.

Derartige Druckluftaufbereitungsanlagen bzw. Lufttrocknerpatronen kommen zum Beispiel in Nutzfahrzeugen wie Lastkraftwagen und Traktoren zum Einsatz. Diese verfügen häufig über einen oder mehrere Druckluftverbraucher wie zum Beispiel Bremssysteme oder Luftfederungen, die mit Druckluft versorgt werden müssen. Die Druckluft wird typischerweise von einem Kompressor, zum Beispiel einem von einem Antriebsmotor des Fahrzeugs angetriebenen Hubkolbenkompressor, zur Verfügung gestellt. Um einen störungsfreien Betrieb der Druckluftverbraucher zu gewährleisten, muss die vom Kompressor bereitgestellte Druckluft üblicherweise weiter aufbereitet werden. In den dafür vorgesehenen Druckluftaufbereitungsanlagen wird die Druckluft von Schmutzpartikeln, die bereits in der angesaugten Luft enthalten waren, sowie Öl- und Rußpartikeln, die während des Verdichtungsprozesses vom Kompressor in die Druckluft eingetragen werden, gereinigt und wird in der Druckluft vorhandene Feuchtigkeit abgeschieden. Zu diesem Zweck verfügen die Druckluftaufbereitungsanlagen von Nutzfahrzeugen in der Regel über Lufttrocknerpatronen, die die Druckluft entfeuchten und vorzugsweise auch Öl- und Schmutzpartikel aufnehmen können.

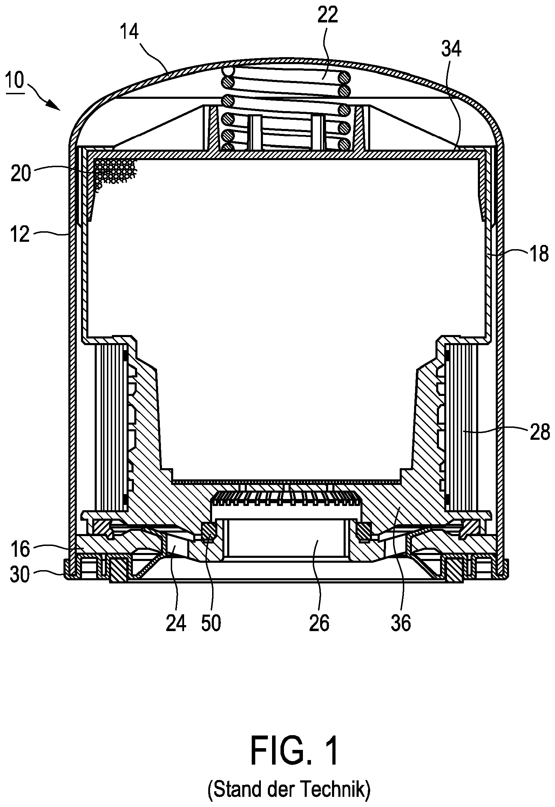

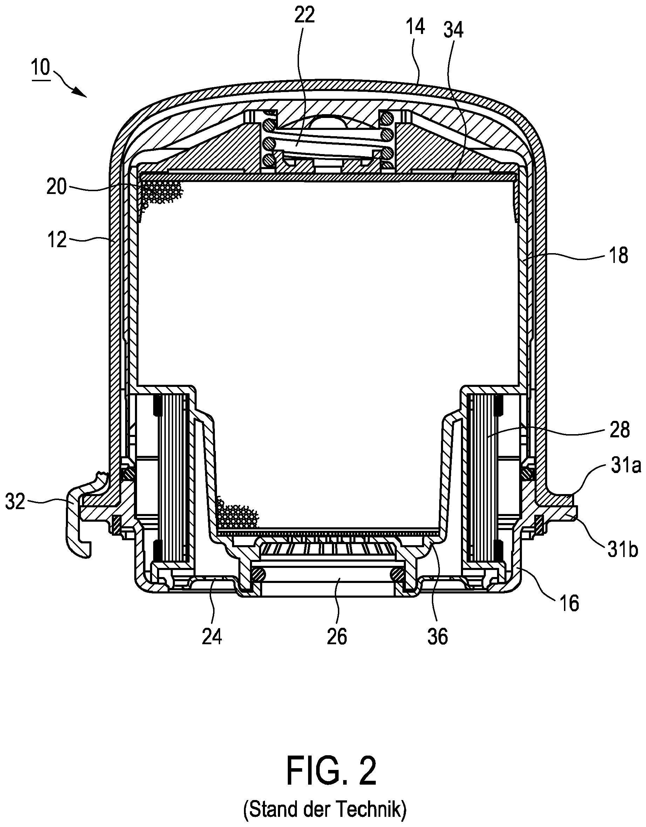

Wie in **Fig. 1** **und** **2** veranschaulicht, weisen herkömmliche Lufttrocknerpatronen 10 typischerweise ein Patronengehäuse 12 mit einem geschlossenen Gehäusedeckel 14 und eine Bodenplatte 16 mit wenigstens einem Lufteinlass 24 und einem Luftauslass 26 auf. In dem Patronengehäuse 12 ist ein zumindest teilweise mit einem Trockenmittel 20 gefüllter Trockenmittelbehälter 18 angeordnet, der einen Behälterdeckel 34 mit mehreren Lufteinströmöffnungen und einen Behälterboden 36 mit mehreren Luftausströmöffnungen aufweist. Zwischen dem Behälterboden 36 und der Bodenplatte 16 ist wenigstens ein Filterelement 28 angeordnet, das in den Ausführungsformen von Fig. 1 und 2 in radialer Richtung des Trockenmittelbehälters von der über den Einlass 24 in die Lufttrocknerpatrone 10 eintretenden Druckluft durchströmt wird. Nach der Filterung strömt die Druckluft durch den Zwischenraum zwischen dem Patronengehäuse 12 und dem Trockenmittelbehälter 18 nach oben und gelangt über die Lufteinströmöffnungen im Behälterdeckel 34 in den Trockenmittelbehälter 18. Nach Durchströmen des Trockenmittels 20 tritt die entfeuchtete Druckluft über die Luftausströmöffnungen im Behälterboden 36 und den Luftauslass 26 aus der Lufttrocknerpatrone 10 aus.

In der herkömmlichen Ausführungsform von Fig. 1, wie sie zum Beispiel auch der in Figur 1 der DE 10 2009 030 897 A1 dargestellten Konstruktion entspricht, ist die Bodenplatte 16 über eine Bördelnaht 30 mit dem Patronengehäuse 12 verbunden. Zur Montage der Lufttrocknerpatrone 10 auf einem Lufttrocknergehäuse ist die Bodenplatte 16 an ihrem den Luftauslass 26 aufweisenden Patronenhals mit einem Innengewinde versehen, über welches die Lufttrocknerpatrone 10 auf das Lufttrocknergehäuse aufgeschraubt werden kann.

Der Erfinder hat festgestellt, dass die Befestigung der Lufttrocknerpatrone auf dem Lufttrocknergehäuse somit in einem druckbeaufschlagten inneren Bereich der Lufttrocknerpatrone erfolgt. Das Innengewinde am Luftauslass wird deshalb in der Regel an einer dicken Bodenplatte aus Stahl angebracht. Ferner hat der Erfinder festgestellt, dass nur ein indirekter Kraftfluss von der Lufttrocknerpatrone auf das Lufttrocknergehäuse existiert. So fließen die Druckkräfte am Patronengehäuse zur Verbördelung mit der Bodenplatte, sodass zunächst eine Kraftübertragung auf die Bodenplatte erfolgt. Die Kräfte fließen dann weiter durch die Bodenplatte zum Innengewinde am Luftauslass und schließlich über die Gewindeverbindung in das Lufttrocknergehäuse.

In der herkömmlichen Ausführungsform von Fig. 2, wie sie zum Beispiel auch der in Figur 1 der DE 10 2009 052 785 B4 dargestellten Konstruktion entspricht, wird die die Lufttrocknerpatrone 10 über einen Bajonettverschluss am Lufttrocknergehäuse befestigt. Hierzu umgreift ein Bajonettring 32 einerseits die Flansche 31a, 31b am Patronengehäuse 12 und an der Bodenplatte 16 und andererseits einen Flansch (nicht dargestellt) am Lufttrocknergehäuse.

Der Erfinder hat festgestellt, dass die Befestigung der Lufttrocknerpatrone auf dem Lufttrocknergehäuse bei dieser Konstruktion zwar im drucklosen äußeren Bereich der Lufttrocknerpatrone erfolgt, aber auch hier nur ein indirekter Kraftfluss von der Lufttrocknerpatrone auf das Lufttrocknergehäuse möglich ist. So fließen die Druckkräfte am Patronengehäuse zum Flansch des Patronengehäuses, sodass zunächst eine Kraftübertragung auf den Bajonettring erfolgt. Die Kräfte fließen dann weiter vom Bajonettring über die Haltenasen am Flansch des Lufttrocknergehäuses in das Lufttrocknergehäuse. Insbesondere der Bajonettring ist daher zum Beispiel aus Stahl und sehr stabil auszuführen.

Dokument DE 198 27 566 A1 offenbart eine Lufttrocknerpatrone mit einem Patronengehäuse mit einem Gehäusedeckel, in dem ein Trockenmittel angeordnet ist. Das Patronengehäuse weist in einem dem Gehäusedeckel abgewandten Endbereich ein Außengewinde auf, das in eine Aufnahme eines Steuergehäuses eingeschraubt wird. Für eine Abdichtung zwischen dem Steuergehäuse und dem Patronengehäuse ist ein Dichtring vorgesehen.

In dem Dokument DE 201 16 232 U1 ist ein Lufttrockner gezeigt, der mit einem Sockel und einem Gehäuse mit einem Trockeneinsatz versehen ist, die über ein Gewinde lösbar und dichtend verbunden sind.

Dokument DE 199 55 898 A1 offenbart eine Trockenmittelbox mit einem Gehäuse und einem darin vorgesehenen Trockenmittelkörper. Das Gehäuse wird aus einem Behälter, in dem der Trockenmittelkörper untergebracht ist, und einem Flansch miteinander dichtend verschraubt gebildet.

Der Erfindung liegt die Aufgabe zugrunde, eine verbesserte Lufttrocknerpatrone mit einem vereinfachten Aufbau zu schaffen. Die Lufttrocknerpatrone soll dabei insbesondere auch einen verbesserten Kraftfluss von an der Lufttrocknerpatrone entstehenden Kräften auf das Lufttrocknergehäuse ermöglichen.

Diese Aufgabe wird gelöst durch eine Lufttrocknerpatrone mit den Merkmalen des unabhängigen Anspruchs 1. Besonders vorteilhafte Ausgestaltungen der Erfindung sind Gegenstand der abhängigen Ansprüche.

Die Lufttrocknerpatrone der Erfindung weist wenigstens einen Lufteinlass und einen Luftauslass sowie ein Patronengehäuse mit einem Gehäusedeckel, in dem ein Trockenmittel angeordnet ist, auf. Erfindungsgemäß weist das Patronengehäuse in seinem dem Gehäusedeckel abgewandten Endbereich wenigstens einen Eingriffsabschnitt zum Eingriff mit einem Gegeneingriffsabschnitt an einem Lufttrocknergehäuse auf.

Gemäß der Erfindung ist die Lufttrocknerpatrone so ausgestaltet, dass sie durch eine direkte Verbindung eines Eingriffsabschnitts am Patronengehäuse mit einem entsprechenden Gegeneingriffsabschnitt am Lufttrocknergehäuse an dem Lufttrocknergehäuse montiert werden kann. Durch diese Maßnahme erfolgt die Befestigung der Lufttrocknerpatrone am Lufttrocknergehäuse im drucklosen äußeren Bereich der Lufttrocknerpatrone. Außerdem ist über die Verbindung zwischen Eingriffsabschnitt und Gegeneingriffsabschnitt ein direkter Kraftfluss vom Patronengehäuse zum Lufttrocknergehäuse möglich. Es ist somit bei der Lufttrocknerpatrone der Erfindung möglich, Bauteile, die bei herkömmlichen Lufttrocknerpatronen in den Kraftfluss vom Patronengehäuse auf das Lufttrocknergehäuse eingebunden sind, einzusparen oder zu entlasten und damit einfacher auszubilden. Durch die Einsparung oder Vereinfachung solcher Bauteile (z.B. Bodenplatte, Bajonettring, etc.) können der Kosten- und der Montageaufwand für die Lufttrocknerpatrone reduziert werden. Aufgrund einer geringeren Anzahl von erforderlichen Bauteilen kann gegebenenfalls auch die Anzahl an erforderlichen Dichtungselementen zwischen den Bauteilen reduziert werden.

Es ist durch die erfindungsgemäße vereinfachte Konstruktion der Lufttrocknerpatrone auch möglich, Bauraum einzusparen und damit mehr Trockenmittel unterzubringen. Im Ergebnis kann die Lufttrocknerpatrone bei gleicher Trockenmittelmenge kleiner bauen oder bei gleicher Baugröße mehr Trockenmittel enthalten.

Die Lufttrocknerpatrone weist ein Patronengehäuse mit einem bevorzugt geschlossenen Gehäusedeckel auf. Der Gehäusedeckel ist vorzugsweise integral oder einstückig mit dem Patronengehäuse ausgebildet. Das Patronengehäuse ist vorzugsweise einschließlich seines Gehäusedeckels aus einem tiefgezogenen Blech gefertigt. An der dem Gehäusedeckel abgewandten Stirnseite ist das Patronengehäuse bevorzugt im Wesentlichen offen ausgestaltet. Das Patronengehäuse hat bevorzugt eine im Wesentlichen zylindrische Form.

Der wenigstens eine Eingriffsabschnitt ist im Endbereich des Patronengehäuses vorgesehen. In diesem Zusammenhang kann der Eingriffsabschnitt am Ende vorgesehen oder etwas vom Ende beabstandet sein. Außerdem erstreckt sich der Eingriffsabschnitt in diesem Zusammenhang vorzugsweise ein gewisses Maß vom Ende des Patronengehäuses in Richtung zum Gehäusedeckel hin. Der wenigstens eine Eingriffsabschnitt ist vorzugsweise integral oder einstückig mit dem Patronengehäuse ausgestaltet.

Die Begriffe "Lufteinlass", "Luftauslass", "Lufteinströmöffnung", "Luftausströmöffnung", etc. beziehen sich in diesem Zusammenhang jeweils auf einen Betriebszustand der Lufttrocknerpatrone während einer Füllphase einer Druckluftaufbereitung, bei der die Lufttrocknerpatrone Trockenleistung erbringt. In einem anderen Betriebszustand der Lufttrocknerpatrone während einer Regenerationsphase, bei der zum Beispiel getrocknete Luft in entgegengesetzter Richtung durch die Lufttrocknerpatrone strömt, um die Wasserbeladung in die Umgebung abzugeben und die Aufnahmekapazität der Lufttrocknerpatrone für weiteres Wasser wiederherzustellen, werden die genannten Öffnungen typischerweise in gegenteiliger Funktion benutzt.

In einer Ausgestaltung der Erfindung kann der Eingriffsabschnitt einen Gewindeabschnitt zum Aufschrauben auf einen Gewindeabschnitt des Gegeneingriffsabschnitts am Lufttrocknergehäuse aufweisen. Die Gewindeabschnitte ermöglichen eine einfache Montage der Lufttrocknerpatrone am Lufttrocknergehäuse. Außerdem ermöglichen die Gewindeabschnitte eine stabile Verbindung und einen zuverlässigen direkten Kraftfluss zwischen Patronengehäuse und Lufttrocknergehäuse. Bei dem Gewindeabschnitt des Eingriffsabschnitts am Patronengehäuse handelt es sich vorzugsweise um ein Innengewinde, im Rahmen der Erfindung sind aber auch Ausgestaltungen mit einem Außengewinde denkbar. Der Gewindeabschnitt des Patronengehäuses ist bevorzugt durch einen Umformprozess oder ein Gewinderollen herstellbar.

In einer Ausgestaltung der Erfindung kann der Eingriffsabschnitt des Patronengehäuses außerhalb eines Luftströmungsweges von dem Lufteinlass der Lufttrocknerpatrone zu dem Trockenmittel vorgesehen sein. Auf diese Weise kann die Befestigung der Lufttrocknerpatrone am Lufttrocknergehäuse in einem luftstrom-unbelasteten Bereich erfolgen. Im Ergebnis kann so vorzugsweise vermieden werden, dass die der Befestigung vorgeschaltete Dichtung nicht kontinuierlich den aggressiven Medien (z.B. gecrackte Öle) ausgesetzt wird, die mit dem Druckluftstrom transportiert werden.

Die vorliegende Erfindung ist grundsätzlich auf Lufttrocknerpatronen mit Trockenmittelbehälter und Lufttrocknerpatronen ohne Trockenmittelbehälter anwendbar.

In einer Ausgestaltung der Erfindung ist das Trockenmittel in einem Trockenmittelbehälter angeordnet, der in dem Patronengehäuse aufgenommen ist und wenigstens eine Lufteinströmöffnung und wenigstens eine Luftausströmöffnung aufweist. Die Verwendung eines Trockenmittelbehälters kann den Zusammenbau der Lufttrocknerpatrone mit dem Trockenmittel darin vereinfachen.

In einer weiteren Ausgestaltung der Erfindung kann wenigstens ein Dichtungselement zum Abdichten zwischen dem Trockenmittel bzw. - falls vorhanden - dem Trockenmittelbehälter und dem Lufttrocknergehäuse im montierten Zustand der Lufttrocknerpatrone vorgesehen sein. Das Dichtungselement ist bevorzugt als Formdichtung ausgestaltet. Das Dichtungselement ist bevorzugt als ringförmiges Dichtungselement ausgestaltet.

Vorzugsweise kann dieses Dichtungselement eine Rückschlagventilfunktion aufweisen, die einen Luftdurchtritt im Normalbetrieb der Lufttrocknerpatrone sperrt und einen Luftdurchtritt im Regenerationsbetrieb der Lufttrocknerpatrone zulässt.

In der erfindungsgemäßen Lufttrocknerpatrone sind grundsätzlich einteilige als auch mehrteilige Trockenmittelbehälter einsetzbar.

In einer Ausgestaltung der Erfindung weist der Trockemittelbehälter einen Behälterboden und einen Behälterdeckel auf.

In einer weiteren Ausgestaltung der Erfindung kann der Behälterboden in einer Axialrichtung des Trockenmittelbehälters bewegbar sein. Bei dieser Ausgestaltung ist vorzugsweise ein Federelement zum Abstützen des Behälterbodens gegen ein Lufttrocknergehäuse im montierten Zustand der Lufttrocknerpatrone am Lufttrocknergehäuse vorgesehen. Bei dieser Ausgestaltung ist bevorzugt ferner eine Transportsicherung zwischen dem Behälterboden und dem Trockenmittelbehälter vorgesehen.

In einer anderen weiteren Ausgestaltung der Erfindung kann der Behälterdeckel in einer Axialrichtung des Trockenmittelbehälters bewegbar sein. Bei dieser Ausgestaltung ist vorzugsweise ein Federelement zum Abstützen des Behälterdeckels gegen den Gehäusedeckel vorgesehen.

In einer noch weiteren Ausgestaltung der Erfindung kann (z.B. am Behälterboden eines vorhandenen Trockenmittelbehälters) wenigstens ein Filterelement im Luftströmungsweg zwischen dem Lufteinlass der Lufttrocknerpatrone und dem Trockenmittel im Patronengehäuse (z.B. der wenigstens einen Lufteinströmöffnung des Behälterdeckels eines vorhandenen Trockenmittelbehälters) angebracht sein. Je nach Ausgestaltung der Lufttrocknerpatrone kann dieses Filterelement so positioniert sein, dass es in einer axialen Richtung des Trockenmittelbehälters oder einer radialen Richtung des Trockenmittelbehälters von der Druckluft durchströmt wird.

Gegenstand der Erfindung ist auch eine Lufttrocknervorrichtung, aufweisend ein Lufttrocknergehäuse und eine oben beschriebene Lufttrocknerpatrone der Erfindung. Der Eingriffsabschnitt des Patronengehäuses der Lufttrocknerpatrone steht dabei mit dem Gegeneingriffsabschnitt des Lufttrocknergehäuses in Eingriff. Bei dem Lufttrocknergehäuse handelt es sich wahlweise um ein Ventilgehäuse.

Die vorliegende Erfindung kann vorzugsweise für Druckluftaufbereitungsanlagen von Kraftfahrzeugen, insbesondere Nutzfahrzeugen verwendet werden.

Obige sowie weitere Vorteile und Merkmale der Erfindung werden aus der nachfolgenden Beschreibung von verschiedenen Ausführungsbeispielen anhand der beiliegenden Zeichnungen besser verständlich. Darin zeigen, zum Teil schematisch:
- Fig. 1: eine Schnittansicht einer herkömmlichen Lufttrocknerpatrone mit einer Schraubverbindung zum Lufttrocknergehäuse;
- Fig. 2: eine Schnittansicht einer herkömmlichen Lufttrocknerpatrone mit einer Bajonettverbindung zum Lufttrocknergehäuse;
- Fig. 3A: eine Schnittansicht einer Lufttrocknerpatrone gemäß einem ersten Ausführungsbeispiel der vorliegenden Erfindung;
- Fig. 3B: eine Schnittansicht der Lufttrocknerpatrone von Fig. 3A in einem am Lufttrocknergehäuse montierten Zustand;
- Fig. 4A: eine Schnittansicht einer Lufttrocknerpatrone gemäß einem zweiten Ausführungsbeispiel der vorliegenden Erfindung; und
- Fig. 4B: eine Schnittansicht der Lufttrocknerpatrone von Fig. 4A in einem am Lufttrocknergehäuse montierten Zustand.

Die Erfindung wird nachfolgend anhand von Lufttrocknerpatronen für Druckluftaufbereitungsanlagen von Nutzfahrzeugen in mehr Einzelheiten beispielhaft erläutert. Bauteile der erfindungsgemäßen Lufttrocknerpatronen entsprechend jenen der in Fig. 1 und 2 dargestellten herkömmlichen Lufttrocknerpatronen sind mit den gleichen Bezugsziffern mit einer vorangestellten "1" gekennzeichnet.

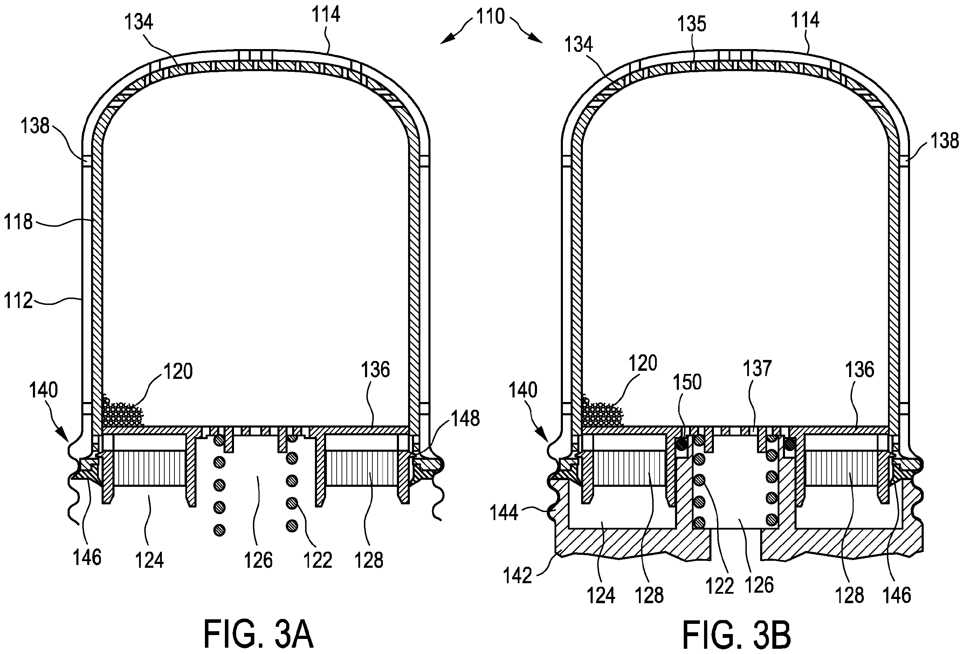

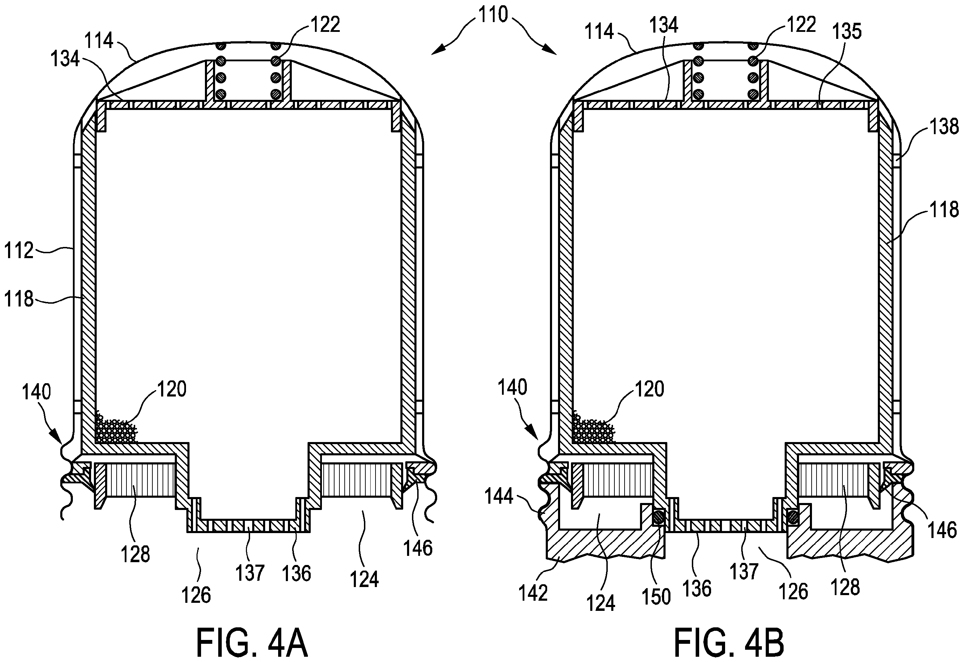

In den **Fig. 3** **und** **4** zeigt die Teilfigur A jeweils die Lufttrocknerpatrone der Erfindung allein und zeigt die Teilfigur B jeweils die Lufttrocknerpatrone in dem an einem Lufttrocknergehäuse montierten Zustand.

Bezug nehmend auf **Fig. 3A und 3B** wird zunächst eine Lufttrocknerpatrone gemäß einem ersten Ausführungsbeispiel der Erfindung erläutert.

Die Lufttrocknerpatrone 110 weist ein im Wesentlichen zylindrisches Patronengehäuse 112 mit einem geschlossenen Gehäusedeckel 114 auf, das in Form eines tiefgezogenen Bleches ausgestaltet ist. In seinem dem Gehäusedeckel 114 abgewandten Endbereich (unten in Fig. 3A und 3B) ist das Patronengehäuse 112 integral mit einem Eingriffsabschnitt 140 ausgebildet, der als ein Innengewinde ausgestaltet ist. Das Innengewinde kann zum Beispiel durch ein Umformen des Patronengehäuses 112 oder ein Gewinderollen ausgebildet werden.

In dem Patronengehäuse 112 ist ein zumindest teilweise mit einem Trockenmittel 120 gefüllter, im Wesentlichen zylindrischer Trockenmittelbehälter 118 aufgenommen, der einen Behälterdeckel 134 mit mehreren Lufteinströmöffnungen 135 und einen Behälterboden 136 mit mehreren Luftausströmöffnungen 137 aufweist. Die Form des Trockenmittelbehälters 118 folgt im Wesentlichen der Form des Patronengehäuses 112, sodass der Raum im Patronengehäuse 112 optimal genutzt werden kann. Um einen Luftströmungskanal zwischen dem Patronengehäuse 112 und dem Trockenmittelbehälter 118 sicherzustellen, sind vorzugsweise mehrere Abstandhalter 138 dazwischen angeordnet.

In dem Ausführungsbeispiel von Fig. 3A und 3B ist der Behälterdeckel 134 einstückig mit dem Trockenmittelbehälter 118 ausgebildet. Dagegen ist der Behälterboden 136 als von dem Trockenmittelbehälter 118 separates Bauteil zum Beispiel aus Kunststoff gefertigt und in die dem Behälterdeckel 134 abgewandte Stirnseite des Trockenmittelbehälters 118 eingesetzt. Dabei ist der Behälterboden 136 in axialer Richtung des Trockenmittelbehälters 118 (Oben/Unten-Richtung in den Figuren) bewegbar.

Zum Befüllen des Trockenmittelbehälters 118 mit einem Trockenmittel 120 wird der Trockenmittelbehälter 118 umgedreht. Aufgrund der ebenen Begrenzungsfläche im Behälterboden 136 kann ein vollständiges Befüllen des Trockenmittelbehälters 118 mit dem Trockenmittel 120 einfach erreicht werden. Um sicherstellen zu können, dass der Trockenmittelbehälter 118 auch im noch nicht am Lufttrocknergehäuse 142 montierten Zustand durch den Behälterboden 136 geschlossen bleibt und das Trockenmittel 120 im Trockenmittelbehälter 118 bleibt, ist bevorzugt eine Transportsicherung 148 zum Beispiel in Form einer Rastverbindung zwischen dem Behälterboden 136 und dem Trockenmittelbehälter 118 vorgesehen.

Um den Behälterboden 136 in Richtung zum Behälterdeckel 134 vorzuspannen und auf diese Weise zum Beispiel Volumenreduzierungen des Trockenmittels 120 im Trockenmittelbehälter 118 ausgleichen zu können, ist ein Federelement 122 vorgesehen. Dieses Federelement 122 ist vorzugsweise am Behälterboden 136 verliersicher befestigt, zum Beispiel festgeklemmt. Im montierten Zustand der Lufttrocknerpatrone 110 stützt sich das Federelement 122 dann am Lufttrocknergehäuse 142 ab (siehe Fig. 3B) und drückt den Behälterboden 136 in Richtung zum Trockenmittelbehälter 118 (nach oben in den Figuren).

Wie in Fig. 3A und 3B dargestellt, weist der Behälterboden 136 bevorzugt eine ringförmige Aussparung auf, in die optional wenigstens ein zum Beispiel ringförmiges Filterelement 128 eingesetzt werden kann. In dem Ausführungsbeispiel von Fig. 3A und 3B wird dieses Filterelement 128 in axialer Richtung des Trockenmittelbehälters 118 (Oben/Unten-Richtung in den Figuren) von der Druckluft durchströmt. In anderen Ausführungsformen ist auch ein Durchströmen des Filterelements 128 in radialer Richtung möglich.

Wie in Fig. 3B erkennbar, ist das Lufttrocknergehäuse 142 an seinem der Lufttrocknerpatrone 110 zugewandten Endbereich mit einem Gegeneingriffsabschnitt 144 in Form eines umlaufenden Außengewindes ausgestaltet. So kann die Lufttrocknerpatrone 110 bei der Montage einfach auf das Lufttrocknergehäuse 142 aufgeschraubt werden.

Im montierten Zustand stehen das Innengewinde 140 am Patronengehäuse 112 und das Außengewinde 144 am Lufttrocknergehäuse 142 miteinander in Eingriff. Es kann somit ein direkter Kraftfluss von an der Lufttrocknerpatrone 110 bzw. deren Patronengehäuse 112 zum Beispiel durch Druck entstehenden Kräften über die Gewindeverbindung 140/144 auf das Lufttrocknergehäuse 142 stattfinden. Die Gewindeverbindung 140/144 ist zudem in einem drucklosen äußeren Bereich der Lufttrocknerpatrone 110 und außerhalb eines Luftströmungsweges der Druckluft durch die Lufttrocknerpatrone 110 positioniert.

Um die gewünschten Strömungswege der Druckluft durch die Lufttrocknerpatrone 110 sicherzustellen, ist ein Dichtungselement 150 zum Beispiel in Form eines O-Rings so zwischen den Behälterboden 136 und das Lufttrocknergehäuse 142 gesetzt, dass es im montierten Zustand der Lufttrocknerpatrone 110 zwischen den Lufteinlässen 124 und dem Luftauslass 126 der Lufttrocknerpatrone 110 abdichtet (siehe Fig. 3B).

Außerdem ist vorzugsweise ein Dichtungselement 146 zum Beispiel in Form einer ringförmigen Formdichtung im Bereich der Gewindeverbindung 140/144 zwischen Patronengehäuse 112 und Lufttrocknergehäuse 142 vorgesehen. Dieses Dichtungselement 146 dichtet das Lufttrocknergehäuse 142 einerseits gegen das Patronengehäuse 112 und den Trockenmittelbehälter 118 und andererseits gegen den Behälterboden 136 druckdicht ab, sodass gewährleistet werden kann, dass die Druckluft im Normalbetrieb der Lufttrocknerpatrone vom Lufteinlass 124 zunächst durch das Filterelement 128 strömt.

Beispielsweise kann der Trockenmittelbehälter 118 gemeinsam mit dem Dichtungselement 146 von unten in das Patronengehäuse 112 eingeschraubt werden. Alternativ können der Trockenmittelbehälter 118 und das Dichtungselement 146 auch bei einem Umformprozess des Patronengehäuses 112 zum Ausbilden des Gewindeabschnitts 140 im Patronengehäuse 112 befestigt werden.

Wie in Fig. 3A und 3B veranschaulicht, ist das Dichtungselement 146 bevorzugt so ausgestaltet, dass es eine Rückschlagventilfunktion aufweist. Dabei soll das Dichtungselement 146 im Normalbetrieb der Lufttrocknerpatrone 110, d.h. im Förderbetrieb der Druckluft, den Bypass zwischen dem Behälterboden 136 und dem Trockenmittelbehälter 118 sperren, sodass die Druckluft vom Lufteinlass 124 durch das Filterelement 128 geleitet wird. In einem Regenerationsbetrieb der Lufttrocknerpatrone 110 öffnet dieses Dichtungselement 146 hingegen den Bypass zwischen dem Behälterboden 136 und dem Trockenmittelbehälter 118, sodass der Regenerationsstrom zumindest teilweise an dem Filterelement 128 vorbei geleitet wird und auf diese Weise zum Beispiel Kondenswasser und Ölpartikel aus der Lufttrocknerpatrone 110 ausgespült werden können.

Bezug nehmend auf **Fig. 4A und 4B** wird nun eine Lufttrocknerpatrone gemäß einem zweiten Ausführungsbeispiel der Erfindung erläutert. Dabei sind entsprechende Komponenten mit den gleichen Bezugsziffern wie im ersten Ausführungsbeispiel gekennzeichnet.

Die Lufttrocknerpatrone 110 ist hinsichtlich des Patronengehäuses 112 und der Verbindung zwischen dem Patronengehäuse 112 und dem Lufttrocknergehäuse 142 analog zur Lufttrocknerpatrone des ersten Ausführungsbeispiels ausgebildet. Die Lufttrocknerpatrone 110 dieses Ausführungsbeispiels unterscheidet sich von jener des ersten Ausführungsbeispiels insbesondere durch die Konstruktion des Trockenmittelbehälters.

So weist auch die Lufttrocknerpatrone 110 dieses Ausführungsbeispiels ein im Wesentlichen zylindrisches Patronengehäuse 112 mit einem geschlossenen Gehäusedeckel 114 auf, das in Form eines tiefgezogenen Bleches ausgestaltet ist. In seinem dem Gehäusedeckel 114 abgewandten Endbereich (unten in Fig. 4A und 4B) ist das Patronengehäuse 112 integral mit einem Eingriffsabschnitt 140 ausgebildet, der als ein Innengewinde ausgestaltet ist. Das Innengewinde kann zum Beispiel durch ein Umformen des Patronengehäuses 112 oder ein Gewinderollen ausgebildet werden.

In dem Patronengehäuse 112 ist ein zumindest teilweise mit einem Trockenmittel 120 gefüllter, im Wesentlichen zylindrischer Trockenmittelbehälter 118 zum Beispiel aus Kunststoff aufgenommen, der einen Behälterdeckel 134 mit mehreren Lufteinströmöffnungen 135 und einen Behälterboden 136 mit mehreren Luftausströmöffnungen 137 aufweist. Um einen Luftströmungskanal zwischen dem Patronengehäuse 112 und dem Trockenmittelbehälter 118 zu erhalten, sind vorzugsweise mehrere Abstandhalter 138 dazwischen angeordnet.

In dem Ausführungsbeispiel von Fig. 4A und 4B ist der Behälterboden 136 einstückig mit dem Trockenmittelbehälter 118 ausgebildet. Dagegen ist der Behälterdeckel 134 als von dem Trockenmittelbehälter 118 separates Bauteil in die dem Behälterboden 136 abgewandte Stirnseite des Trockenmittelbehälters 118 eingesetzt. Dabei ist der Behälterdeckel 134 in axialer Richtung des Trockenmittelbehälters 118 (Oben/Unten-Richtung in den Figuren) bewegbar.

Das Trockenmittel 120 kann bei abgenommenem Behälterdeckel 134 einfach von oben in den Trockenmittelbehälter 118 gefüllt werden. Aufgrund der ebenen Begrenzungsfläche im Behälterdeckel 134 ist ein vollständiges Befüllen des Trockenmittelbehälters 118 mit dem Trockenmittel 120 einfach erreichbar.

Um den Behälterdeckel 134 in Richtung zum Behälterboden 136 vorzuspannen und auf diese Weise zum Beispiel Volumenreduzierungen des Trockenmittels 120 im Trockenmittelbehälter 118 ausgleichen zu können, ist zwischen dem Gehäusedeckel 114 und dem Behälterdeckel 134 ein Federelement 122 vorgesehen, das den Behälterdeckel 134 in Richtung zum Trockenmittelbehälter 118 drückt (nach unten in den Figuren).

Da in dem Ausführungsbeispiel von Fig. 4A und 4B ein bewegbarer Behälterdeckel 134 vorgesehen ist und das Federelement 122 dementsprechend zwischen Gehäusedeckel 114 und Behälterdeckel 134 angeordnet ist, steht im Bereich des Patronenhalses mehr Bauraum für das Trockenmittel 120 im Trockenmittelbehälter 118 zur Verfügung.

Wie in Fig. 4A und 4B dargestellt, weist der Behälterboden 136 analog zum ersten Ausführungsbeispiel bevorzugt eine ringförmige Aussparung auf, in die optional wenigstens ein zum Beispiel ringförmiges Filterelement 128 eingesetzt werden kann.

Wie in Fig. 4B erkennbar, erfolgt die Montage der Lufttrocknerpatrone 112 an einem Lufttrocknergehäuse 142 analog zum ersten Ausführungsbeispiel über die Gewindeverbindung 140/144.

Wie im ersten Ausführungsbeispiel von Fig. 3A und 3B ist auch in diesem Ausführungsbeispiel vorzugsweise ein Dichtungselement 146 zum Beispiel in Form einer ringförmigen Formdichtung und bevorzugt mit Rückschlagventilfunktion im Bereich der Gewindeverbindung 140/144 zwischen Patronengehäuse 112 und Lufttrocknergehäuse 142 vorgesehen. Ebenso ist auch ein weiteres Dichtungselement 150 zum Beispiel in Form eines O-Rings zwischen den Behälterboden 136 und das Lufttrocknergehäuse 142 in diesem Ausführungsbeispiel vorhanden (siehe Fig. 4B).

Die vorliegende Erfindung ist selbstverständlich nicht auf die Ausführungsbeispiele der Fig. 3 und 4 beschränkt. Der Fachmann wird vielmehr zahlreiche Varianten und Modifikation innerhalb des Schutzbereichs der Ansprüche erkennen.

Während in den obigen Ausführungsbeispielen jeweils ein zweiteiliger Trockenmittelbehälter mit einem Behälterdeckel und einem Behälteboden zum Aufnehmen des Trockenmittels vorgesehen ist, können auch einteilige oder mehrteilige Trockenmittelbehälter zum Einsazu kommen.

Auch müssen die Luftströmungswege durch die Lufttrocknerpatrone und durch ihren Trockenmittelbehälter nicht notwendigerweise in der anhand der Fig. 3 und 4 veranschaulichten Weise erfolgen. Beispielsweise können die Lufteinströmöffnungen und die Luftausströmöffnungen auch gemeinsam auf einer Seite des Trockenmittelbehälters liegen, kann die Luft den Trockenmittelbehälter mehrfach durchlaufen, und dergleichen.

Ferner kann bei der Lufttrocknerpatrone der Erfindung auch ganz auf einen Trockenmittelbehälter verzichtet werden. Das Trockenmittel wird in diesem Fall zum Beispiel direkt in dem Patronengehäuse angeordnet.

### BEZUGSZEICHENLISTE

- 10, 110: Lufttrocknerpatrone
- 12, 112: Patronengehäuse
- 14, 114: Gehäusedeckel
- 16: Bodenplatte
- 18, 118: Trockenmittelbehälter
- 20, 120: Trockenmittel
- 122: Federelement
- 24, 124: Lufteinlass
- 26, 126: Luftauslass
- 28, 128: Filterelement
- 30: Bördelnaht
- 31a, 31b: Flansche
- 32: Bajonettring
- 34, 134: Behälterdeckel
- 135: Lufteinströmöffnungen
- 36, 136: Behälterboden
- 137: Luftausströmöffnungen
- 138: Abstandhalter
- 140: Eingriffsabschnitt
- 142: Lufttrocknergehäuse
- 144: Gegeneingriffsabschnitt
- 146: Dichtungselement
- 148: Transportsicherung
- 50, 150: Dichtungselement

## Patentansprüche

1. Lufttrocknerpatrone (110), insbesondere für eine Druckluftaufbereitungsanlage eines Nutzfahrzeugs, aufweisend wenigstens einen Lufteinlass (124) und einen Luftauslass (126); und ein Patronengehäuse (112) mit einem Gehäusedeckel (114), in dem ein Trockenmittel (120) angeordnet ist,
wobei
das Patronengehäuse (112) in seinem dem Gehäusedeckel (114) abgewandten Endbereich wenigstens einen Eingriffsabschnitt (140) zum Eingriff mit einem Gegeneingriffsabschnitt (144) an einem Lufttrocknergehäuse (142) integral aufweist, und
der Eingriffsabschnitt (140) einen Gewindeabschnitt zum Aufschrauben auf einen Gewindeabschnitt des Gegeneingriffsabschnitts (144) am Lufttrocknergehäuse (142) aufweist,
**dadurch gekennzeichnet, dass**
das im Wesentlichen zylindrische Patronengehäuse (112) mit dem geschlossenen Gehäusedeckel (114) in Form eines tiefgezogenen Blechs ausgestaltet ist, und der Eingriffsabschnitt (140) als ein Innengewinde ausgestaltet ist, das durch ein Umformen des Patronengehäuses (122) oder ein Gewinderollen ausgebildet ist.

2. Lufttrocknerpatrone (110) nach Anspruch 1, bei welcher der Eingriffsabschnitt (140) des Patronengehäuses (112) außerhalb eines Luftströmungsweges von dem Lufteinlass (124) der Lufttrocknerpatrone (110) zu dem Trockenmittel (120) vorgesehen ist.

3. Lufttrocknerpatrone (110) nach einem der vorhergehenden Ansprüche, bei welcher das Trockenmittel (120) in einem Trockenmittelbehälter (118) angeordnet ist, der in dem Patronengehäuse (112) aufgenommen ist und wenigstens eine Lufteinströmöffnung (135) und wenigstens eine Luftausströmöffnung (137) aufweist.

4. Lufttrocknerpatrone (110) nach einem der vorhergehenden Ansprüche, bei welcher wenigstens ein Dichtungselement (146) zum Abdichten zwischen dem Trockenmittel (120) oder, falls vorhanden, dem Trockenmittelbehälter (118) und dem Lufttrocknergehäuse (142) im montierten Zustand der Lufttrocknerpatrone (110) vorgesehen ist.

5. Lufttrocknerpatrone (110) nach Anspruch 4, bei welcher das Dichtungselement (146) eine Rückschlagventilfunktion aufweist, die einen Luftdurchtritt im Normalbetrieb der Lufttrocknerpatrone sperrt und einen Luftdurchtritt im Regenerationsbetrieb der Lufttrocknerpatrone zulässt.

6. Lufttrocknerpatrone (110) nach einem der Ansprüche 3 bis 5, bei welcher der Trockenmittelbehälter (118) einen Behälterboden (136) und einen Behälterdeckel (134) aufweist.

7. Lufttrocknerpatrone (110) nach Anspruch 6, bei welcher der Behälterboden (136) in einer Axialrichtung des Trockenmittelbehälters (118) bewegbar ist, wobei ein Federelement (122) zum Abstützen des Behälterbodens (136) gegen ein Lufttrocknergehäuse (142) vorgesehen ist.

8. Lufttrocknerpatrone (110) nach Anspruch 7, bei welcher eine Transportsicherung (148) zwischen dem Behälterboden (136) und dem Trockenmittelbehälter (118) vorgesehen ist.

9. Lufttrocknerpatrone (110) nach Anspruch 6, bei welcher der Behälterdeckel (134) in einer Axialrichtung des Trockenmittelbehälters (118) bewegbar ist, wobei ein Federelement (122) zum Abstützen des Behälterdeckels (136) gegen den Gehäusedeckel (114) vorgesehen ist.

10. Lufttrocknerpatrone (110) nach einem der vorhergehenden Ansprüche, bei welcher wenigstens ein Filterelement (128) im Luftströmungsweg zwischen dem Lufteinlass (124) der Lufttrocknerpatrone (110) und dem Trockenmittel (120) im Patronengehäuse (112) angebracht ist.

11. Lufttrocknervorrichtung, aufweisend ein Lufttrocknergehäuse (142) und eine Lufttrocknerpatrone (110) nach einem der vorhergehenden Ansprüche, wobei der Eingriffsabschnitt (140) des Patronengehäuse (112) der Lufttrocknerpatrone (110) mit dem Gegeneingriffsabschnitt (144) des Lufttrocknergehäuses (142) in Eingriff steht.

## Claims

1. Air dryer cartridge (110), in particular for a compressed air preparation system of a utility vehicle, having at least one air inlet (124) and an air outlet (126), and a cartridge housing (112) with a housing cover (114) in which a drying agent (120) is arranged,
wherein
the cartridge housing (112) has, integrally, in its end region facing away from the housing cover (114), at least one engagement portion (140) for engagement with a mating engagement portion (144) on an air dryer housing (142), and
the engagement portion (140) has a threaded portion for screwing onto a threaded portion of the mating engagement portion (144) on the air dryer housing (142),
**characterised in that**
the substantially cylindrical cartridge housing (112) is equipped with the closed housing cover (114) in the form of a deep-drawn plate, and the engagement portion (140) is configured as an internal thread which is formed by reshaping the cartridge housing (122) or by thread rolling.

2. Air dryer cartridge (110) according to claim 1, in which the engagement portion (140) of the cartridge housing (112) is provided outside of an air flow path from the air inlet (124) of the air dryer cartridge (110) to the drying agent (120).

3. Air dryer cartridge (110) according to one of the preceding claims, in which the drying agent (120) is arranged in a drying agent container (118) which is accommodated in the cartridge housing (112) and has at least one air inflow opening (135) and at least one air outflow opening (137).

4. Air dryer cartridge (110) according to one of the preceding claims, in which at least one sealing element (146) is provided to form a seal between the drying agent (120) or, if present, the drying agent container (118), and the air dryer housing (142) when the air dryer cartridge (110) is in the assembled state.

5. Air dryer cartridge (110) according to claim 4, in which the sealing element (146) has a nonreturn valve function which blocks a passage of air during normal operation of the air dryer cartridge and permits a passage of air in the regeneration mode of the air dryer cartridge.

6. Air dryer cartridge (110) according to one of claims 3 to 5, in which the drying agent container (118) has a container base (136) and a container cover (134).

7. Air dryer cartridge (110) according to claim 6, in which the container base (136) is movable in an axial direction of the drying agent container (118), wherein a spring element (122) is provided for supporting the container base (136) against an air dryer housing (142).

8. Air dryer cartridge (110) according to claim 7, in which a transport securing means (148) is provided between the container base (136) and the drying agent container (118).

9. Air dryer cartridge (110) according to claim 6, in which the container cover (134) is movable in an axial direction of the drying agent container (118), wherein a spring element (122) is provided for supporting the container cover (136) against the housing cover (114).

10. Air dryer cartridge (110) according to one of the preceding claims, in which at least one filter element (128) is fitted in the air flow path between the air inlet (124) of the air dryer cartridge (110) and the drying agent (120) in the cartridge housing (112).

11. Air dryer device, having an air dryer housing (142) and an air dryer cartridge (110) according to one of the preceding claims, wherein the engagement portion (140) of the cartridge housing (112) of the air dryer cartridge (110) is in engagement with the mating engagement portion (144) of the air dryer housing (142).

## Revendications

1. Cartouche (110) de sécheur d'air, notamment pour un système de traitement d'air comprimé d'un véhicule utilitaire, comportant au moins une entrée (124) d'air et une partie (126) d'air ; et une enveloppe (112) de cartouche ayant un couvercle (114) d'enveloppe dans lequel est mis un agent (120) dessiccateur, dans lequel
l'enveloppe (112) de la cartouche a, de manière intégrée, dans sa partie d'extrémité loin du couvercle (114) de l'enveloppe, au moins une partie (140) d'engrènement pour engrener avec une partie (144) antagoniste d'engrènement sur une enveloppe (142) de sécheur d'air, et
la partie (140) d'engrènement a une partie filetée de vissage sur une partie filetée de la partie (144) antagoniste d'engrènement de l'enveloppe (142) du sécheur d'air,
**caractérisé en ce que**
l'enveloppe (112) de la cartouche essentiellement cylindrique est conformée avec le couvercle (114) d'enveloppe fermé sous la forme d'une tôle à emboutissage profond et la partie (140) d'engrènement est conformée en taraudage, qui est constitué par une déformation de l'enveloppe (122) de la cartouche ou par un moletage.

2. Cartouche (110) de sécheur d'air suivant la revendication 1, dans laquelle la partie (140) d'engrènement de l'enveloppe (112) de la cartouche est prévue à l'extérieur d'un chemin d'écoulement d'air, de l'entrée (124) d'air de la cartouche (110) de sécheur d'air à l'agent (120) dessiccateur.

3. Cartouche (110) de sécheur d'air suivant l'une des revendications précédentes, dans laquelle l'agent (120) dessiccateur est disposé dans un récipient (118) d'agent dessiccateur, qui est logé dans l'enveloppe (112) de la cartouche et qui a au moins une ouverture (135) d'entrée d'air et au moins une ouverture (137) de sortie d'air.

4. Cartouche (110) de sécheur d'air suivant l'une des revendications précédentes, dans laquelle il est prévu au moins un élément (146) d'étanchéité pour réaliser l'étanchéité entre l'agent (120) dessiccateur ou, s'il est présent, le récipient (118) d'agent dessiccateur et l'enveloppe (142) du sécheur d'air, lorsque la cartouche (110) du sécheur d'air est à l'état monté.

5. Cartouche (110) de sécheur d'air suivant la revendication 4, dans laquelle l'élément (146) d'étanchéité a une fonction de clapet antiretour, qui empêche un passage de l'air en fonctionnement normal de la cartouche du sécheur d'air et autorise un passage de l'air, lorsque la cartouche du sécheur d'air est en fonctionnement de régénération.

6. Cartouche (110) de sécheur d'air suivant l'une des revendications 3 à 5, dans laquelle le récipient (118) d'agent dessiccateur a un fond (136) de récipient et un couvercle (134) de récipient.

7. Cartouche (110) de sécheur d'air suivant la revendication 6, dans laquelle le fond (136) du récipient est mobile, dans la direction axiale du récipient (118) d'agent dessiccateur, un élément (122) et un ressort étant prévus pour appuyer le fond (136) du récipient sur une enveloppe (142) du sécheur d'air.

8. Cartouche (110) de sécheur d'air suivant la revendication 7, dans laquelle il est prévu une sécurité (148) de transport entre le fond (136) de récipient et le récipient (118) d'agent dessiccateur.

9. Cartouche (110) de sécheur d'air suivant la revendication 6, dans laquelle le couvercle (134) du récipient est mobile dans une direction axiale du récipient (118) d'agent dessiccateur, un élément (122) à ressort étant prévu pour appuyer le couvercle (136) de récipient sur le couvercle (114) de l'enveloppe.

10. Cartouche (110) de sécheur d'air suivant l'une des revendications précédentes, dans laquelle il est monté au moins un élément (128) de filtre dans le chemin de l'écoulement d'air, entre l'entrée (124) d'air de la cartouche (110) du sécheur d'air et l'agent (120) dessiccateur, dans l'enveloppe (112) de la cartouche.

11. Système à sécheur d'air, comportant une enveloppe (142) de sécheur d'air et une cartouche (110) de sécheur d'air suivant l'une des revendications précédentes, la partie (140) d'engrènement de l'enveloppe (112) de la cartouche (110) du sécheur d'air engrenant avec la partie (144) antagoniste d'engrènement de l'enveloppe (142) du sécheur d'air.
